# EUROPEAN PATENT APPLICATION

(11) **EP 1 352 560 A2**
(43) Date of publication of application: **15.10.2003**
(21) Application number: 03076055.7
(22) Date of filing: 10.04.2003
(51) Int. Cl.: A01K 1/015

(54) **Cattle flooring method and apparatus**

(30) Priority: 10.04.2002 US 371118 P
(71) Applicant: Grievink Holding B.V., 7123 AK Aalten (NL)
(72) Inventor: Folkema, Gary, Ingersol (CA)
(74) Representative: Prins, Adrianus Willem

(57) **Abstract**

The invention relates to a flooring apparatus, in particular a cattle flooring apparatus, comprising: (a) interlocking mats (100) including mat sections, inter connected with interlocking webs defined at mat edges; and (b) a means (200) for connecting adjacent mat sections and maintaining said mat edges flush and flat in a horizontal plane. The invention further relates to a method providing for flooring, in particular cattle flooring, comprising: (a) installing interlocking mats including mat sections, said mat sections inter connected with interlocking webs defined at mat edges and installed in areas for cattle to walk on; (b) anchoring said interlocking mats to a concrete slat floor with an anchoring means, preferably a concrete slat floor having slat openings.

## Description

### Field of the Invention

The present invention relates to flooring; in particular flooring for cattle operations and more in particular relates to soft flooring provided for cattle operations.

### Background of the Invention

Presently, in cattle and dairy operations, concrete flooring is often used. Anyone who has stood for even a few minutes on a concrete floor knows about aching feet and numb legs. Cows often spend 10 hours a day standing and walking on concrete. Many farmers feel that a major reason for culling is lameness associated with walking on hard floors. Experts in the field have indicated that flooring for cattle should provide comfort and confident footing for cows and unfortunately, concrete is not the most comfortable flooring for cows to be walking on.

In this regard, some dairy operations have used rubber belting and others have tried various forms of rubber mats, both of which having there own problems associated with installation and maintenance of these flooring systems. Farmers are looking for ways to improve flooring conditions for their cows. Anecdotal evidence has shown that cows prefer walking on materials which are closer to pasture like conditions and some evidence suggest that cows give more milk when their walking conditions and standing conditions have been adjusted to be as close as possible to pasture like conditions.

Therefore, there is a need for flooring systems in cattle and dairy operations which most closely simulates pasture like conditions and provides cattle with dry comfortable and sure footing. In industrial environments a similar need exists for flooring systems to prevent personnel from aching feet and numb legs when standing on a concrete floor.

### Summary of the invention

The present invention, a flooring apparatus, in particular a cattle flooring apparatus, comprises:
(a) interlocking mats including mat sections, inter connected with interlocking webs defined at mat edges.
(b) a means for connecting adjacent mat sections and maintaining said mat edges flush and flat in a horizontal plane.

Preferably further comprising a means for anchoring said interlocking mats to a concrete floor, preferably a concrete floor, having slat openings.

Preferably wherein said anchoring means includes a slat anchor including a dome member for securing said mat together with said slat anchor to a slatted floor by urging said dome member of said slat anchor through a mat opening and into a slat opening. Such a slat anchor or other type anchoring means, e.g. a bolt, may also be used to anchor the mat to a cylindrical hole provided in the concrete floor.

Preferably wherein said slat anchor includes a lattice structure including at least one vertical member connecting a cap to said dome member, such that said vertical members substantially span said mat thickness and said cap covering over said mat opening and urging downwardly on a top surface of said mat.

Preferably wherein said anchor further including a horizontal member connecting said vertical members with said dome member, wherein said horizontal member including shoulders on each side for engaging with a bottom surface of said mat.

Preferably wherein said dome member including a wedge area for contacting with a slat opening contour.

Preferably wherein said connecting means includes mat connectors forming a mat connection such that a connection is made across a mat edges by placing one mat connector adjacent a top surface of said mats and a second mat connector placed adjacent a bottom surface of said mats such that said top and upper and lower mat connectors are adapted to interlock though mat holes in said mats thereby connecting together adjacent mat sections and clamping onto said mats.

Preferably wherein said mat connector further including a strap including a male connector proximate one end and a female connector proximate the other end, said male and female connectors adapted for cooperating with each other by interconnecting a male connector form above with a female connector from below and vice versa.

Preferably wherein said male connector further including a cylindrical plug defining a rod aperture there through and said female end including a outer sheath and a central rod defining a plug aperture there between, said plug aperture for receiving said cylindrical plug and said rod aperture for receiving said central rod in concentric fashion.

Preferably wherein said interlocking webs including mat tongues and corresponding interlocking mat grooves, wherein said tongues having a length L and a depth D, and said mat having a thickness of T and a first radius R1 defining a first shoulder and a second radius R2 defining a second shoulder.

Preferably wherein the ratio of said first radius to said second radius being substantially 1:1.

Preferably wherein the ratio of said first radius to said second radius being 1: ≤1.5 or 1.5 ≥:1.

Preferably wherein the ratio of T:L being substantially 1: 3 - 5.

Preferably wherein the ratio of D:L being substantially 1: 1.5 - 2.5.

Preferably wherein the ratio of T:D being substantially 1: 1.5 to 2.5.

Preferably, the mat is provided with preformed apertures for the connectors and/or the anchors. Such preformed apertures may e.g. be a predrilled hole that is reamed to a larger diameter to accommodate a connector or anchor. Such preformed apertures may also be a pre-cut or scored section that is removed to accommodate a connector or anchor. Further embodiments of the invention are described in the description and claims.

### Brief Description of the Drawings

The invention will now be described by way of example only, with references to the following drawings in which:
**Figure 1** is a schematic top representation of two interconnected mat sections showing the present invention the cattle flooring method and apparatus.
**Figure 2** is a schematic top plan view of a component of a mat connector.
**Figure 3** is a schematic side elevational view of the strap.
**Figure 4** is a schematic side elevational view of the assembled mat connector.
**Figure 5** is a schematic bottom plan view of the mat connector.
**Figure 6** is a schematic side elevational view of a fastener which is part of the mat connector.
**Figure 7** is a schematic bottom plan view of the fastener which is used with the mat connector.
**Figure 8** is a schematic top plan view of the fastener head which is part of the mat connector.
**Figure 9** is a schematic side elevational view of the fastener which is part of the mat connector.
**Figure 10** is a schematic side cross sectional schematic view of the mat connector shown diploid together with two mat sections, indicating how mat connector connects the two mat sections together.
**Figure 11** is a schematic top plan view of a slat anchor.
**Figure 12** is a schematic side elevational view of a slat anchor.
**Figure 13** is a schematic side elevational view of a slat anchor.
**Figure 14** is a schematic cross-sectional schematic view of the slat anchor diploid together with a mat in a slatted concrete floor.
**Figure 15** is a schematic perspective view of the cattle flooring method and apparatus 90 showing two mat sections being joined together with a mat connector and anchored with a slat anchor having a textured surface and mounted on an underlay.
**Figure 16** is a schematic top plan view of a presently preferred mat connector.
**Figure 17** is a schematic side cross-sectional view of the presently preferred mat connector.
**Figure 18** is a schematic side cross sectional view of the mat connector deployed with two mat sections showing the interconnection and the mat connectors in the locked position.
**Figure 19** is a schematic partial view of a portion of a inter-locking web showing the dimensional proportions of a mat tongue.

### Detailed Description of the Preferred Embodiment

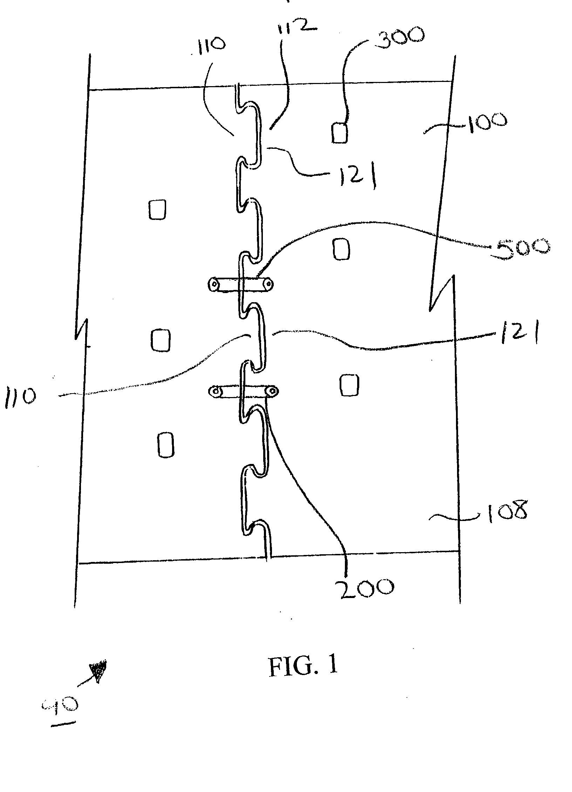

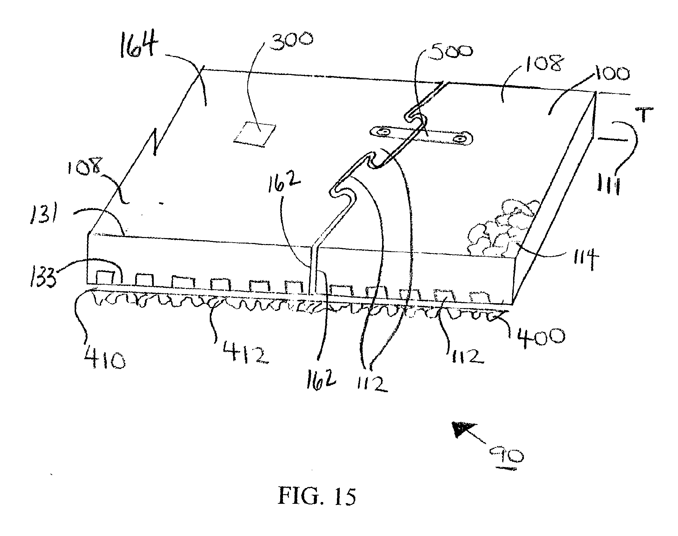

The examplary embodiment of present invention shown in Figures 1 and 15 is a cattle flooring method an apparatus shown generally 90 and includes the following major components, namely interlocking mats 100, mat connectors 200, slat anchors 300, underlay 400 and a presently preferred mat connector 500.

A cattle flooring method and apparatus 90 is comprised of a number of interlocking mats 100 having a top surface 131, bottom surface 133 which are comprised of, a number of mat sections 108 which are connected via interlocking webs 112 having mat tongues 110, mat grooves 121 on the connecting edges of interlocking mats 100. Interlocking mat 100 is preferably manufactured of 100% revulcanized rubber and each section can be shaped and cut to the particular application it is to be applied to. For example, mat sections 108 may be rectangular in configuration for feed alleys and/or stalls and/or may be pie shaped for milking parlours in order to produce a circular configuration when mat sections 108 are connected together.

Preferably interlocking mats 100 have a textured top surface 114 and mat channels 112 defined on the bottom surface. For additional comfort and moisture protection, an underlay 400 can be also installed prior to placing interlocking mats 100. Underlay 400 includes a moisture barrier 410 adjacent the bottom of interlocking mat 100 and a particle layer 412 preferably made of rubber and/or neoprene particles which are rigidly connected to moisture barrier 410. The interlocking webs 112 as shown in Figures 15 as well as in Figure 1, may be defined on all mat edges 162 of interlocking mat 100 or may only be defined on some mat edges 162 of mat section 108 again depending upon the application.

In practise, interlocking mats 100 are generally 3/4 of an inch thick and underlay 400 is generally ½ inch thick. The purpose of interlocking mats 100 is to provide a soft comfortable and dry footing for cattle as they walk on the interlocking 100 mat surface. The present system attempts to simulate natural conditions. The texture surface 114 is so designed that when cattle place a hoof on the surface, the water below the hoof is channelled away from the foot print itself, thereby making the walking dryer and safer for the cattle. Generally speaking concrete flooring has been the floor used to date, and there has also been some application of rubber belting placed on the concrete flooring. The present invention provides an alternative to present flooring systems.

### Interlocking Webs

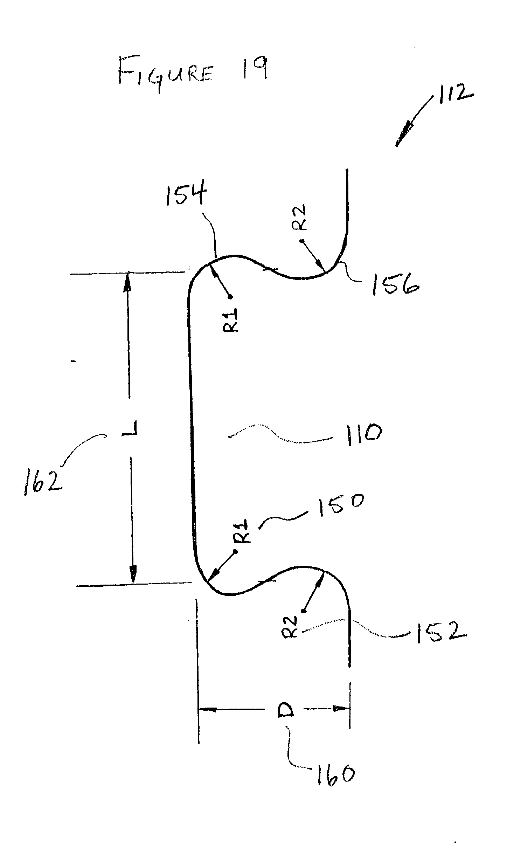

Referring now to Figure 19 which is a schematic top plan view of a portion of the inner locking webs 112 showing a single mat tongue 110 and the dimensional proportions of mat tongue 110. The major dimensions of mat tongue 110 are the lengths L 162, depth D 160, thickness T 111 shown in Figure 15, first radius R1 150, and second radius R2 152.

First radius R1 150 shown in Figure 19 defines first shoulder 154 of mat tongue 110 and secondly radius R2 152 shown in Figure 19 defines second shoulder 156 of mat tongue 110. Through experimentation and trial and error, the inventor has determined that in order to maximize the strength of the joint between two mat sections 108 shown as interlocking webs 112 is optimized when the dimensions of mat tongue 110 fall within a certain dimensional ranges as defined here below. These optimum dimensions not only maximize the interlocking web 112 strength, but also minimize the curling and/or the lifting of mat tongue 110 from the flat position. Optimally, first radius R1 shown as 150 is approximately equal to second radius R2 shown as 152. However, the ratios between first radius R1 shown as 150 and second radius R2 shown as 152 can vary up to a ratio of 1:1.5, or 1.5:1.

Furthermore, the length L shown as 162 in Figure 19 optimally is two times the depth D shown as 160 in Figure 19. However, the length can vary anywhere from 1.5 to 2.5 times the depth D 160.

Furthermore, it has been found that thickness T shown as 111 in Figure 15 is optimally one half of the depth D shown as 160 in Figure 19 and 1/4 of the length L shown as 162 in Figure 19. The optimal dimensional ratios between thickness T shown as 111, length L shown as 162 and Depth D shown as 160 are summarized below in chart form showing both the optimal ratio and the outer limits of the ratios of these dimensions in order to obtain adequate performance.

Note that when these dimensional proportions are not observed, the strength of the joint created by interlocking webs 112 is compromised and mat tongue 110 has a tenancy to lift creating problems and deterioration of the joint created by interlocking webs 112.

### OPTIMAL DIMENSIONAL RATIO'S

T:D:L
   1: 2: 4

### OUTER OPERATING LIMITS

T : D
   1 : 1.5 - 2.5
D : L
   1: 1.5- 2.5
T:L
   1:3-5

### Mat Connector

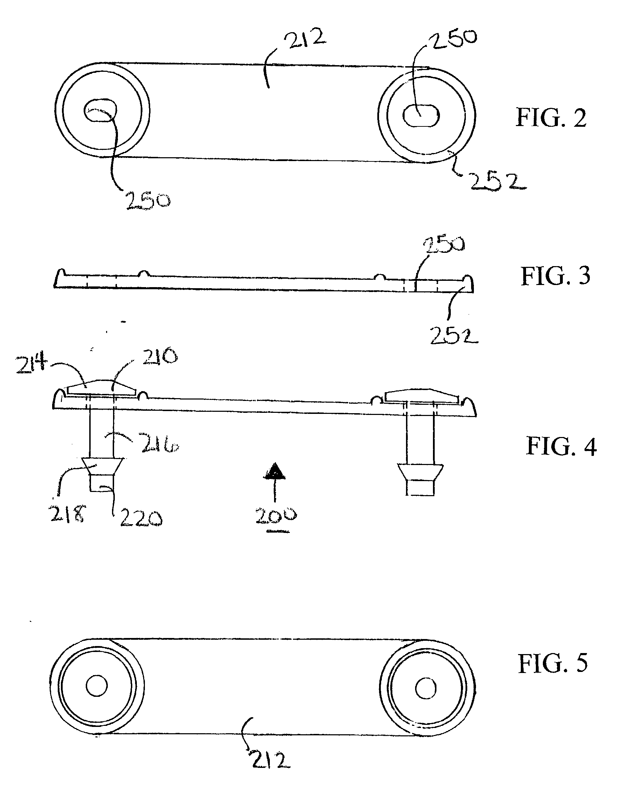

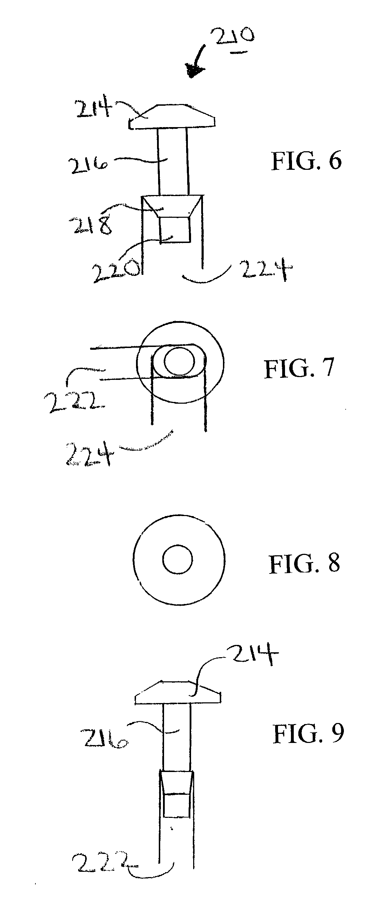

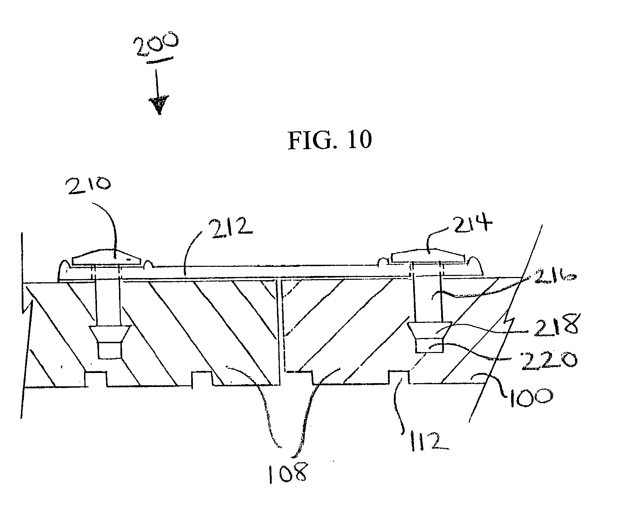

Referring now to Figures 2 through 10 which depicts a mat connector shown generally as 200 in Figure 10, and includes a strap 212 together with two fasteners 210 located at each distal end of strap 212. Strap 212 includes apertures 250 at each end for receiving shank 216 of fastener 210 there through. A protecting ridge 252 defines a surface for placement of fastener head 214. Fastener 210 includes a head 214 connected to a shank portion 216 and having a wedge anchor 218 as well as a tip 220 all intregally part of shank 216. Wedge anchor 218 has a length 224 and width 222 making it oblong in shape as best shown in Figure 7. This corresponds to the oblong aperture 250 shown in Figure 2 such that wedge anchor 218 of fastener 210 passes through aperture 250 with some resistance, however it is very difficult to remove fastener 210 from strap 212 once it has been placed through aperture 250.

As shown in Figures 4 and Figure 10, a complete mat connector 200 includes one strap 212 and two fasteners 210 each located at a distal end through aperture 250 of strap 212.

In use, mat connector 200 is used to connect two adjacent mat sections 108 together as shown schematically in Figure 1 and in cross section in Figure 10. Two holes, roughly the diameter of shank 216 or slightly smaller, are drilled and/or punched into adjacent mats sections 108, such that fasteners 210 of mat connector 200 can align with these holes. Strap 212 together with two fasteners 210 are then forceable attached to mat sections 108 by forcibly urging each fastener 210 into the pre-drilled wholes in mat sections 108. The shape of wedge anchor 218 enables fastener 210 to enter and penetrate into mat sections 108, however makes removal in the reverse directions very difficult.

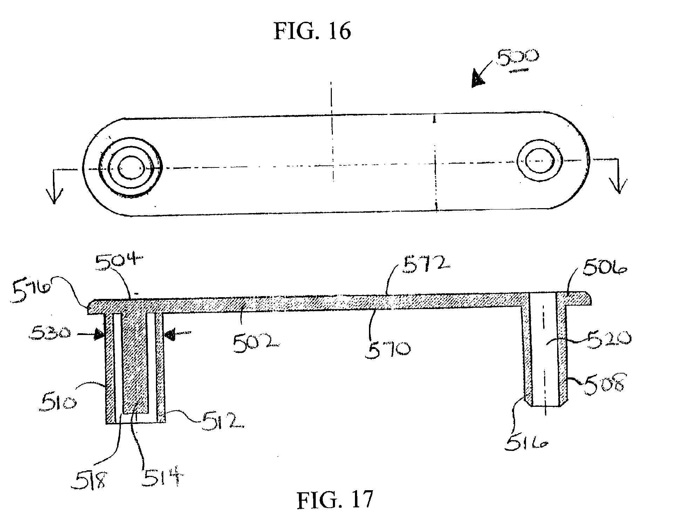

Kindly note that a presently preferred embodiment of mat connector 200 is described here below as mat connector 500 as depicted in Figures 16, 17 and 18.

### Slat Anchor

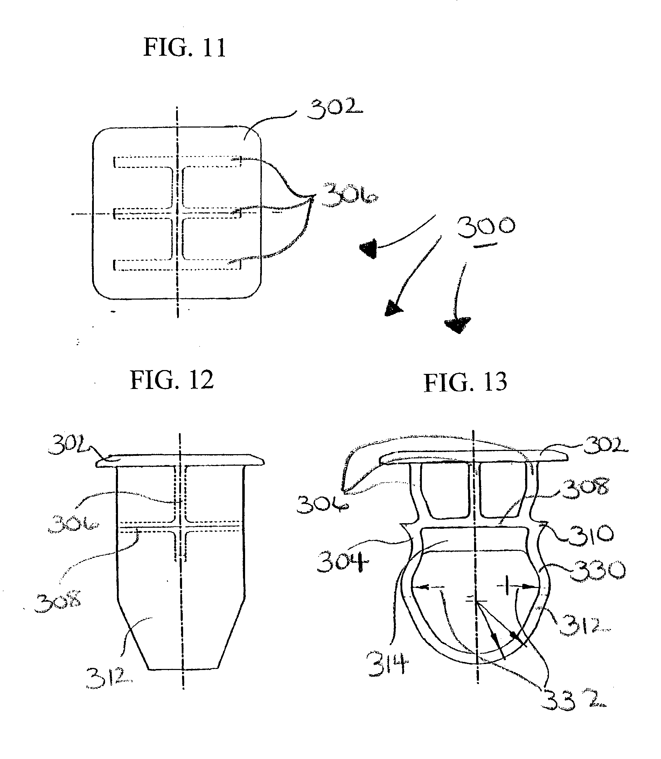

Slat anchor shown generally as 300 and depicted in Figures 11 through 14 and in situ schematically in Figures 1 and 15 are used to anchor interlocking mats 100 onto slatted concrete floors 324 which are often used in the cattle industry. Slat anchor 300 provides a quick simple and removable method of anchoring interlocking mats 100 to the concrete slatted surface without introducing any unnecessary objects and/or dangers to the cattle walking over interlocking mats 100.

Referring now to Figures 11, 12 and 13. Slat anchor shown generally as 300 includes cap 302 having a lattice structure 304 which includes vertical members 309, a horizontal member 308 which also defines a shoulder 310 at each end, reinforcing rib 314 and a dome member 312 having a wedge area 330 which moves resiliently in the dome movement direction 332 shown by arrows in Figure 13.

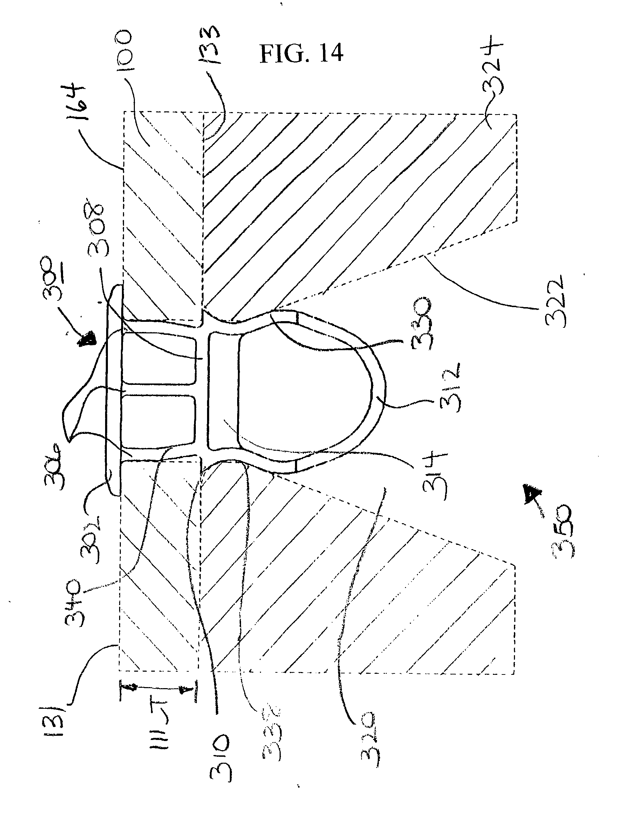

Referring now to Figure 14, anchor slat 300 is shown deployed in a concrete slatted floor 324 together with an interlocking mat 100. In order to install anchor slat 300, a mat opening 340 is created in interlocking mat 100 which aligns with the top of slat opening 320. Slat opening 320 is normally flared out as shown in the profile in Figure 14 and each side wall defines a slat opening contour 322 including a wedge contact area 340 as shown in Figure 14. Cap 302 is dimensioned to cover over the mat opening 340 and the distance between the underside of cap 302 and the top of shoulder 310 is roughly the thickness T 111 of interlocking mat 100. Slat anchor 300 is positioned into a slat opening 320 as shown in Figure 14 by forcibly urging anchor slat 300 downwardly through mat opening 340 and further downwardly into slat opening 320 until anchor slat 300 is positioned as shown in Figure 14. During the insertion of anchor slat 300 into slat opening 320, wedge area 330 of dome member 312 makes contact with the narrowest point of slat opening 320 namely slat constriction 338. The contact of dome member 312 with slat constriction 338 causes the dome member to squish resiliently together particularly at wedge area 330 in the dome movement direction 332 as shown in Figure 13. In practise the distortion of dome member 312 when placed into slat opening 320 is somewhat more complicated then as depicted in Figure 13, however for the purpose of this application, it is enough to understand that wedge area 330 moves resiliently inwardly and outwardly in dome movement direction 332 as it is being forcibly urged past slat constriction 338.

Dome member 312 is dimensioned such that when anchor slat 300 is in the locked position as shown in Figure 14, wedge area 330 as shown in Figure 13 as well as in Figure 14, is biased against wedge contact area 340 of slat opening contour 322. In this position it is difficult to extract anchor slat 300 from slat opening 320.

A person skilled in the art will realize that the installation of slat anchors 300 is very straight forward that once mat openings 340 have been created, one simply needs to take a hammer and forcibly urge anchor slat 300 into slat opening 320 thereby firmly anchoring interlocking mat 100 to concrete slatted floor 324. A person skilled in the art will also see that anchor slats 300 are reusable in that they can be extracted without permanently damaging anchor slat 300 by prying upwardly on anchor slat 300 out of slat opening 320.

Preferably anchor slat 300 is injection molded out of a pliable resilient plastic which is suitable for this application and the cap 302 portion of slat anchor 300 is designed to provide minimal interference with animals walking on interlocking mats 100.

### Presently Preferred Mat Connector 500

Referring now to Figures 16 through 18 which show generally mat connector 500 which is a presently preferred design over the one previously described above as mat connector 200.

The major advantages over the previous mat connector 200 is that mat connector 500 is manufactured from a single continuous part making manufacturability less expensive, more reliable and providing for a more positive connection.

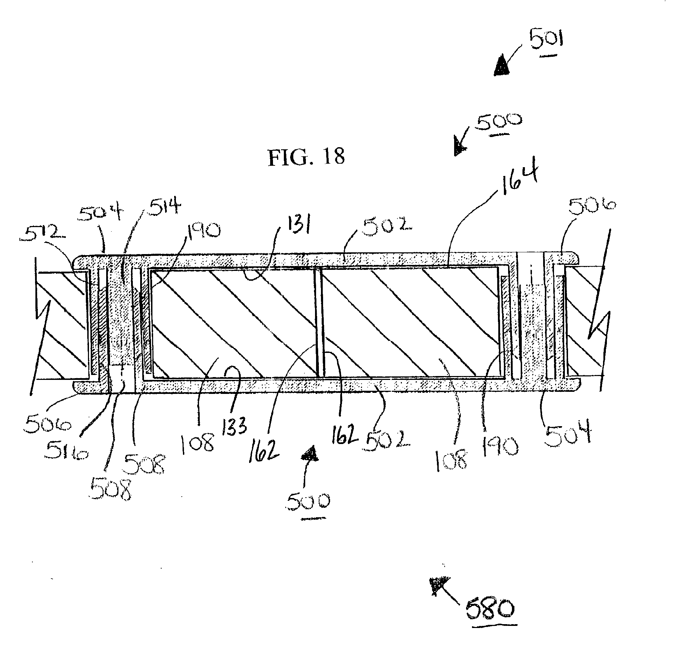

Mat connector 500 shown in Figures 16 and 17 includes the following major components, namely strap 502 having at a one distal end, a male end 506 and at the other distal end a female end 504. Strap 502 is preferably a thin planar member.

Female end 504 preferably includes an outer cylindrical sheath 512, central rod 514, disposed concentrically to outer sheath 512, whereby the space between the central rod 514 and the inner diameter of out sheath 512 defines a plug aperture 518 as shown in Figures 17. Outer sheath 512 also defines sheath outer diameter 530 and all of these components make up female connector 510. Female connector 510 is designed to interlock with male connector 508 disposed at male end 506.

Male connector 508 includes a cylindrical plug 516 the interior of which defines a rod aperture 520. Figure 18 shows two mat connectors 500 deployed in situ together with mat sections 108.

In use a person skilled in the art will recognize that two mat connectors 500 are necessary in order to create mat connection 501 as shown in Figure 18. One connector is located underneath mat 100 and the other above.

Mat connectors 500 are used to traverse the connection between two mat sections 108 namely over interlocking webs 112. Over time interlocking webs 112 which include mat tongues 110 tend to lift and this is particularly troublesome when alley scrapers or other devices are used to clean the matting material. It is desirable to have a system in place which will keep mat tongues of interlocking webs 112 flush with the surface of interlocking mats 100. In other words, interlocking webs 112 are maintained flush with horizontal plane 164.

Mat connectors 500 are attached to adjacent mat sections 108 by firstly creating mat holes 190 in each adjacent mat section 108 which is large enough to accommodate the sheath outer diameter 530 of mat connector 500. The lower mat connector 500 is inserted into mat holes 190 and cooperates with and is interlocked with an upper mat connector 500 which is oriented in reverse fashion. Female end 504 of the upper mat connector interlocks with male end 506 of the lower mat connector 500. At the other end in similar fashion, the male end 506 of the upper mat connector 500 interlocks with female end 504 of the lower mat connector.

The cylindrical plug 516 of male connector 508 is slightly tapered from top to bottom such that as cylindrical plug 516 is inserted into plug aperture 518 of female connector 510, it interferingly enters into plug aperture 518 and progressively becomes a tighter and tighter fit as the upper and lower mat connectors 500 are brought closer and closer together. In addition, the central rod 514 of female connector 510 is also slightly tapered and it as well fits interferingly into rod aperture 520 of male connector 508 thereby also creating a tighter fit as upper and lower mat connectors 500 are brought together. In the locked position 580 shown in Figure 18, the lower surface 570 of mat connector 500 contacts the textured surface 114 of mat section 108 as well as the bottom surface of mat sections 108. Adjacent mat sections 108 are sandwiched between the two mat connectors 500 with strap 502 located adjacent the upper and lower surfaces of mat section 108. In this manner tongues 110 of interlocking webs 112 are kept flush with the upper surface of mat sections 108.

It should be apparent to persons skilled in the arts that various modifications and adaptation of this structure described above are possible without departure from the spirit of the invention the scope of which defined in the appended claim.

## Claims

1. A flooring apparatus, in particular a cattle flooring apparatus, comprising:
(a) interlocking mats including mat sections, inter connected with interlocking webs defined at mat edges; and
(b) a means for connecting adjacent mat sections and maintaining said mat edges flush and flat in a horizontal plane.

2. The flooring apparatus claimed in Claim 1, further comprising a means for anchoring said interlocking mats to a concrete floor, preferably a concrete floor, having slat openings.

3. The flooring apparatus claimed in Claim 2 wherein said anchoring means includes a slat anchor including a dome member for securing said mat together with said slat anchor to a slatted floor by urging said dome member of said slat anchor through a mat opening and into a slat opening.

4. The flooring apparatus claimed in Claim 2 or 3 wherein said slat anchor includes a lattice structure including at least one vertical member connecting a cap to said dome member, such that said vertical members substantially span said mat thickness and said cap covering over said mat opening and urging downwardly on a top surface of said mat.

5. The flooring apparatus claimed in any of Claims 2-4, wherein said anchor further including a horizontal member connecting said vertical members with said dome member, wherein said horizontal member including shoulders on each side for engaging with a bottom surface of said mat.

6. The flooring apparatus claimed in any of Claims 3-5, wherein said dome member including a wedge area for contacting with a slat opening contour.

7. The flooring apparatus claimed in any of Claims 1-6 wherein said connecting means includes mat connectors forming a mat connection such that a connection is made across a mat edges by placing one mat connector adjacent a top surface of said mats and a second mat connector placed adjacent a bottom surface of said mats such that said top and upper and lower mat connectors are adapted to interlock though mat holes in said mats thereby connecting together adjacent mat sections and clamping onto said mats.

8. The flooring apparatus claimed in Claim 7 wherein said mat connector further including a strap including a male connector proximate one end and a female connector proximate the other end, said male and female connectors adapted for cooperating with each other by interconnecting a male connector form above with a female connector from below and vice versa.

9. The flooring apparatus claimed in Claim 8 wherein said male connector further including a cylindrical plug defining a rod aperture there through and said female end including a outer sheath and a central rod defining a plug aperture there between, said plug aperture for receiving said cylindrical plug and said rod aperture for receiving said central rod in concentric fashion.

10. The flooring apparatus claimed in any of Claims 1-9 wherein said interlocking webs including mat tongues and corresponding interlocking mat grooves, wherein said tongues having a length L and a depth D, and said mat having a thickness of T and a first radius R1 defining a first shoulder and a second radius R2 defining a second shoulder.

11. The flooring apparatus claimed in Claim 10, the ratio of said first radius to said second radius being substantially 1:1.

12. The flooring apparatus claimed in Claim 10, the ratio of said first radius to said second radius being 1: ≤ 1.5 or 1.5 ≥:1.

13. The flooring apparatus claimed in any of Claims 10-12, the ratio of T:L being substantially 1: 3 - 5.

14. The flooring apparatus claimed in any of Claims 10-13, the ratio of D:L being substantially 1: 1.5 - 2.5.

15. The flooring apparatus claimed in any of Claims 10-13, the ratio of T:D being substantially 1: 1.5 to 2.5.

16. A method providing for flooring, in particular cattle flooring, comprising:
(a) installing interlocking mats including mat sections, said mat sections inter connected with interlocking webs defined at mat edges and installed in areas for cattle to walk on;
(b) anchoring said interlocking mats to a concrete slat floor with an anchoring means, preferably a concrete slat floor having slat openings.

17. The method claimed in claim 16 wherein said anchoring means includes a slat anchor including a dome member for securing said mat together with said slat anchor to a slatted floor by urging said dome member of said slat anchor through a mat opening and into a slat opening.

18. The method claimed in claim 17 wherein said slat anchor includes a lattice structure including at least one vertical member connecting a cap to said dome member, such that said vertical members substantially span said mat thickness and said cap covering over said mat opening and urging downwardly on a top surface of said mat.

19. The method claimed in any of Claims 15-18, further including the step of (c) connecting adjacent mat sections and maintaining said mat edges flush and flat in a horizontal plane with a connecting means.

20. The method claimed in any of Claims 15-19 wherein said connecting means includes mat connectors forming a mat connection such that a connection is made across a mat edge by placing one mat connector adjacent a top surface of said mats and a second mat connector placed adjacent a bottom surface of said mats such that said top and upper and lower mat connectors are adapted to interlock though mat holes in said mats thereby connecting together adjacent mat sections and clamping onto said mats.
